# FASCICULE DE BREVET EUROPEEN

(11) **EP 0 966 817 B1**
(45) Date de publication et mention de la délivrance du brevet: **21.04.2004**
(21) Numéro de dépôt: 98913886.2
(22) Date de dépôt: 11.03.1998
(51) Int. Cl.: H04L 12/66

(54) **PROCEDE D'ECHANGE DE DONNEES, AVEC ADAPTATION, ENTRE UN RESEAU RADIO DE COMMUNICATION ET DES MOYENS DE TRAITEMENT DE DONNEES**
VERFAHREN ZUM DATENAUSTAUSCH, MIT KONVERSION, ZWISCHEN FUNKKOMMUNIKATIONSNETZ UND DATENVERWALTUNGSMITTEL
DATA EXCHANGING METHOD, WITH ADAPTATION, BETWEEN A RADIO COMMUNICATION NETWORK AND DATA PROCESSING MEANS

(30) Priorité: 12.03.1997 FR 9702930
(43) Date de publication de la demande: 29.12.1999
(73) Titulaire: SAGEM SA, 75116 Paris (FR)
(72) Inventeur: DIMECH, Jean-Marc, F-60240 Chaumont en Vexin (FR)
(74) Mandataire: Bloch, Gérard
(86) Numéro de dépôt international: PCT/FR1998/000489
(87) Numéro de publication internationale: WO 1998/040989

(56) Documents cités:
- EP-A- 0 655 873
- WO-A-93/02512

## Description

Le développement des réseaux radio de communication s'est accéléré ces dernières années pour transmettre des signaux vocaux depuis ou vers des postes radiotéléphoniques mobiles. Afin de se prémunir contre le bruit radio, l'évolution s'est faite vers les transmissions numériques, avec un codage de la voix. De ce fait, un réseau comme le réseau GSM, par exemple, permet aussi de transmettre des données avec un combiné portatif.

On peut raccorder un appareil de traitement de données, comme un PC, au réseau radio. Cependant, comme la transmission des données sur le réseau GSM est effectuée à un rythme déterminé, l'injection et l'extraction des données par des circuits d'interface radio du combiné nécessitent d'interposer un adaptateur de données pour, d'une part, une adaptation du format des données, entre le format du PC et celui prévu pour le réseau GSM et, d'autre part, une adaptation de débit ainsi qu'une synchronisation pour injecter et extraire les données à l'instant voulu, c'est-à-dire en temps réel.

Ces diverses contraintes, et en particulier l'aspect temps réel, incitent à dédier des circuits spécifiques à chacune des tâches évoquées ci-dessus mais une telle solution est pénalisante en volume, coût et consommation. Cette dernière obère l'autonomie en durée de fonctionnement entre recharges du combiné, durée qui est déjà très limitée et qu'il est donc exclu de réduire.

EPO 655 873A enseigne ainsi une interface d'adaptation à bus série entre un téléphone mobile et un terminal de données.

WO 93/02512 enseigne un bus informatique à multiplexage temporel pour lequel les contentions d'accès au bus sont réglées par examen de niveaux de priorité.

La présente invention vise à permettre une transmission de données, sur tout réseau radio de communication adapté, en limitant les inconvénients évoqués ci-dessus.

A cet effet, l'invention concerne un procédé d'échange de données entre un réseau radio de communication, transmettant les données à un rythme déterminé, et des moyens de traitement de données reliés au réseau par des moyens d'adaptation, interposés entre les moyens de traitement et des moyens radio d'interface avec le réseau, commandés par une unité centrale d'un terminal de radiocommunication comprenant les moyens d'adaptation, caractérisé par le fait que
- l'unité centrale commande des tâches des moyens d'adaptation et d'autres en temps partagé,
- on asservit sur le rythme du réseau la tâche de transmission des données entre les moyens d'adaptation et les moyens radio,
- on affecte aux tâches commandées par l'unité centrale des niveaux de priorité et
- on affecte à ladite tâche de transmission un niveau de priorité supérieur à celui des tâches des moyens d'adaptation.

Ainsi, l'unité centrale multitâche n'a pas à être dupliquée pour la gestion de l'adaptation des données et elle assure cependant des échanges en temps réel avec le réseau puisque ceux-ci sont prioritaires. L'adaptation, qui est locale, peut en effet être traitée en temps masqué entre deux transmissions aux moyens radio, donc tolérer une attente dans son exécution, liée au niveau de priorité plus faible.

L'invention sera mieux comprise à l'aide de la description suivante d'un mode de réalisation préféré du procédé de l'invention, en référence au dessin annexé, sur lequel :

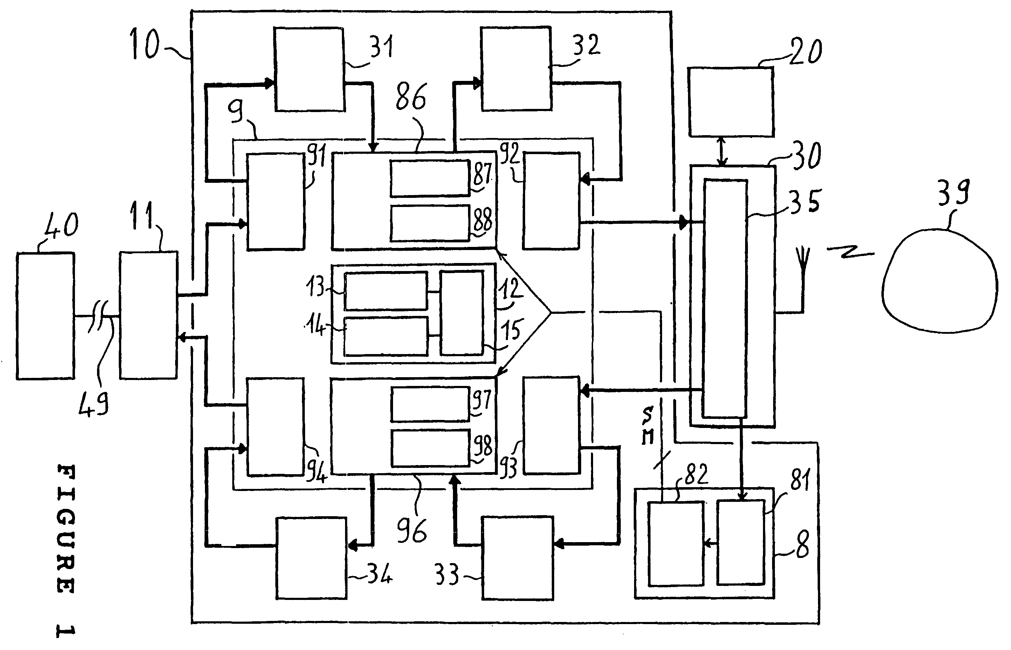

- la figure 1 est un schéma par blocs d'un terminal, raccordé à un PC, pour la mise en oeuvre de ce procédé,
- la figure 2 est un diagramme temporel expliquant le séquencement du terminal, en fonction du temps t en abscisse et
- la figure 3 illustre des niveaux de priorité de diverses tâches du terminal.

Le terminal représenté, ici un combiné mobile de radiotéléphonie 11, 10, 20, 30, comporte une unité centrale 10 reliée, ici de façon bidirectionnelle, d'une part, à un circuit radio 30 avec modem 35 d'interface radio en émission/réception avec un réseau de radiocommunication 39, ici le réseau de radiotéléphonie GSM permettant la transmission de données et, d'autre part, à un circuit d'interface locale de transmission 11, ici à la norme V24, relié à un PC 40 par une liaison 49, pour offrir à celui-ci un accès au réseau GSM 39. Dans un autre exemple, ce pourrait être un circuit de traitement de données interne au terminal qui se substitue au PC 40 et à son interface 11.

Pour mémoire, on a schématisé, par le bloc 20 raccordé au circuit radio 30, les circuits classiques de numérotation et de communication vocale, comportant en particulier un clavier, un microphone, un haut-parleur et leurs circuits d'interface. L'unité centrale 10 gère le bloc 20, par des liaisons non représentées.

L'unité centrale 10 comporte un microprocesseur 9, quatre registres tampon 31, 32, 33 et 34 et une base de temps 8, comportant un oscillateur 81 suivi de diviseurs de fréquence 82, commandant le microprocesseur 9. Ce dernier comporte quatre registres tampon de transit 91, 92, 93 et 94, deux ensembles de calcul, d'adaptation de données, 86 et 96, un ensemble 12 de traitement de signalisation avec un circuit 13 pour les signalisations téléphoniques classiques, en mode circuit, et un circuit 14 traitant les signalisations en mode paquet, tous deux raccordés à un circuit 15 gérant la signalisation GSM (niveau 3 de la normalisation internationale pour les systèmes ouverts OSI).

Une voie d'émission de données à émettre sur le réseau 39 part du circuit 11 d'interface V24 et aboutit au circuit radio 30 en traversant, dans l'ordre de propagation des données, le registre de transit 91, le registre tampon 31, l'ensemble d'adaptation 86, le registre tampon 32 et enfin le registre de transit 92.

L'ensemble d'adaptation 86 comporte un circuit 87 de traitement de données de signalisation de type téléphonique et un circuit 88 de données de signalisation de type MINITEL. L'ensemble d'adaptation 96, recevant les données provenant du réseau 39, comporte de même des circuits 97 et 98 fonctionnellement homologues des circuits respectifs 87 et 88. Il aurait cependant pu être prévu des circuits intégrés séparés pour les ensembles 86, 96, par exemple des circuits à la demande (ASIC) ou un processeur de signal (DSP) commandés par le microprocesseur 9, c'est-à-dire formant fonctionnellement une unité avec lui.

On comprendra que cette représentation par blocs fonctionnels a pour unique but la clarté de l'exposé. En pratique, les ensembles 12, 86 et 96 sont en fait des tâches exécutées en temps partagé par des circuits communs du microprocesseur 9. On conçoit que les diverses liaisons point à point représentées n'ont qu'un but didactique pour exposer clairement les étapes de cheminement des données et qu'en fait il s'agit d'un bus reliant les divers circuits et exploité séquentiellement en partage de temps par les diverses tâches établissant ces liaisons point à point. Les registres de transit 91 à 94 sont de ce fait physiquement un seul registre exploité en temps partagé. Les registres tampon 31 à 34 peuvent de ce même n'être qu'un seul registre physique, éventuellement intégré au microprocesseur 9.

L'intégration dans le combiné GSM de l'adaptation des données évite ainsi la nécessité d'une carte à microprocesseur raccordée à celui-ci pour effectuer cette adaptation. Le volume total, et la consommation, du matériel reste ainsi limité d'autant que l'unité centrale 10, ou microprocesseur 9, unique gère elle-même, donc de façon centralisée, multitâche, le séquencement de ses tâches (comme 86, 96), sans nécessité de raccorder une carte externe d'adaptation à microprocesseur, donc sans perte de temps correspondant aux négociations qui seraient nécessaires en pareil cas dans le système décentralisé qui serait alors réalisé.

En sens inverse, une voie de réception de données radio part du circuit radio 30, traverse les circuits 93, 33, 96, 34, 94 et aboutit au circuit 11.

Le fonctionnement du terminal GSM avec le PC 40 associé va maintenant être expliqué.

Pour une transmission de données entre le PC 40 et un autre appareil de transmission de données relié au réseau GSM 39, directement ou à travers un autre réseau, l'ensemble 10 assure l'adaptation des données échangées entre les deux appareils, afin qu'elles puissent être transmises à travers le réseau GSM 39.

Dans un premier cas, d'établissement d'une liaison de données en mode téléphonique ou "circuit" vers un appareil relié au réseau GSM 39, directement ou à travers le réseau analogique RTC, un utilisateur commande, à partir du PC 40, l'émission du numéro de téléphone de l'appareil appelé. Le numéro émis sur la liaison 49 est reçu par le circuit 13 à travers les circuits 11 et 91. L'unité centrale 10 analyse à cet effet la signalisation reçue du PC 40 et l'aiguille vers le circuit 13 ou le circuit 14 selon sa nature : téléphonique, mode circuit, ou de type MINITEL, mode paquet. Ce numéro est transmis au circuit 15 qui gère l'établissement de la communication GSM, et en particulier assure les fonctions de la couche de niveau 3 dans les sept couches de la classification internationale OSI. Ainsi, le circuit 15 échange, par le modem 35, une séquence de messages de signalisation avec le réseau GSM 39 èt adapte cette séquence en fonction des messages de signalisation reçus de celui-ci en réponse à chaque message, afin de gérer l'établissement et la rupture d'une communication, c'est-à-dire le lien physique portant la liaison logique d'application entre les deux appareils de traitement de données. Le circuit 15 commande aussi le modem 35 de connexion au réseau 39, en ce sens qu'il peut le configurer selon des paramètres déterminés, comme par exemple sa vitesse et sa fréquence de modulation.

Une fois la communication établie, à travers le réseau 39, entre le PC 40 et l'appareil appelé, la transmission des données entre eux fait intervenir les ensembles 86 et 96 pour adapter les données à échanger. Les circuits 87 et 97 assurent en particulier l'adaptation des données entre l'interface V24 et le réseau GSM 39 en ce qui concerne leur format de présentation, respectivement en émission depuis le PC 40 vers le circuit radio 30 et en réception, de celui-ci vers le PC 40. Il s'agit ici de la fonction RA1' de la recommandation ETSI 04.21, concernant l'assemblage / désassemblage de trames V110 de 36 ou 60 bits utiles. On conçoit que d'autres normes d'adaptation de niveau 2, comme l'ECMA 102, sont envisageables. L'interface V24 transmet en mode asynchrone à 2,4, 4,8 ou 9,6 kb/s, tandis que, côté réseau GSM 39, les bits sont échangés à un débit synchrone déterminé de 3,6, ou 6 ou encore 12 kb/s. Le circuit 88 réalise la fonction RA0 de la recommandation 04.21, c'est-à-dire l'adaptation de débit, entre données asynchrones et données synchrones, vers le débit supérieur 2ⁿ x 600 bits/s le plus proche (n : entier positif), par bourrage ou suppression de bits "stop", le circuit 98 effectuant l'opération inverse.

Dans un second cas, d'établissement d'un appel du PC 40 vers un serveur MINITEL, le principe d'établissement de la communication est le même que ci-dessus mais fait intervenir les circuits 14, 87 et 88.

Des communications par appel du PC 40 à partir d'un appareil relié au réseau radio 39 peuvent de même être établies.

Dans cet exemple, l'ensemble 10 sert de circuit d'adaptation (niveau 2) et de gestion des protocoles de communication (niveau 3) pour l'établissement des liaisons radio transmettant les données à travers le réseau GSM 39. En d'autres termes, le terminal GSM, le réseau 39 et un autre terminal GSM semblable raccordant l'autre appareil de transmission de données sont transparents vis-à-vis de l'application, ou traitement, (couches logicielles de niveau 7).

Cependant, il est ici prévu que l'ensemble 10 comporte, en plus de l'adaptation et des protocoles de gestion des liaisons radio, des fonctions relatives à des couches OSI dépassant le niveau 3, et en particulier traite au moins une partie de l'application relative aux données transmises.

Le cheminement détaillé des données pour les étapes élémentaires par lesquelles elles passent va être précisé ci-dessous, puis leur séquencement.

Les bits émis par le PC 40 sur la liaison V24 référencée 49 sont reçus dans le circuit 11 sous la forme d'octets série encadrés par des bits de START et de STOP et mémorisés temporairement dans un circuit UART de l'interface 11. Lorsqu'un octet complet a été reçu, le circuit d'interface 11 émet une interruption vers le microprocesseur 9 et celui-ci se libère ainsi que le bus, au bout d'un certain délai, fonction de la priorité des tâches en cours. L'UART du circuit 11 émet alors, en entrée de la voie d'émission, l'octet considéré sur le bus et le registre de transit 91 le mémorise temporairement pour le retransmettre au registre tampon 31, qui sert de tampon d'entrée pour des blocs de données qui seront traités par l'ensemble 86. Lorsqu'un bloc de données, de taille suffisante pour une trame V110, a été stocké dans le registre 31, le microprocesseur 9, qui en gère l'écriture, ou recharge, et la lecture, ou vidage, peut détecter que le seuil suffisant de remplissage a été atteint. Le microprocesseur 9 transfère alors le bloc de données du registre 31 dans un registre de travail, non représenté, de l'ensemble 86. Un logiciel commande alors le microprocesseur 9 pour exécuter la tâche d'adaptation des données indiquée ci-dessus et fournir ainsi une trame V110 qui est stockée temporairement dans un registre de travail local de sortie, non représenté. Celui-ci est ensuite vidé dans le registre tampon 32 afin de libérer, pour d'autres tâches, les registres de travail du microprocesseur 9. Le contenu du registre tampon 32 est par la suite transmis au modem radio GSM 35 par une tâche de transfert en deux étapes, en passant par le registre tampon de transit 92, selon le processus déjà expliqué pour le registre 91.

Le principe de la transmission, sur la voie de réception, des données radio reçues, du circuit radio 30 d'interface au circuit 11 d'interface V24, est semblable à celui qui vient d'être exposé pour la voie d'émission et il ne sera donc pas décrit plus avant, hormis le fait que l'ensemble 96 effectue la conversion inverse de celle de l'ensemble 86, pour fournir des données V24, en particulier exemptes de bits de bourrage.

La synchronisation puis le séquencement des diverses étapes ci-dessus vont maintenant être précisés.

Globalement, le procédé suivant est exécuté :
- l'unité centrale 10 commande les tâches des ensembles d'adaptation 86, 96 et d'autres en temps partagé,
- on asservit sur le rythme du réseau 39 la tâche de transmission des données (32, 92; 33, 93) entre les moyens d'adaptation 32, 92; 33, 93 et le circuit radio 30,
- on affecte aux tâches 32, 92; 33, 93; 86, 96 commandées par l'unité centrale 10 des niveaux de priorité P1 et P3 et
- on affecte à ladite tâche de transmission (32, 92; 33, 93) un niveau de priorité P3 supérieur à celui, P1, des tâches des moyens d'adaptation 86, 96.

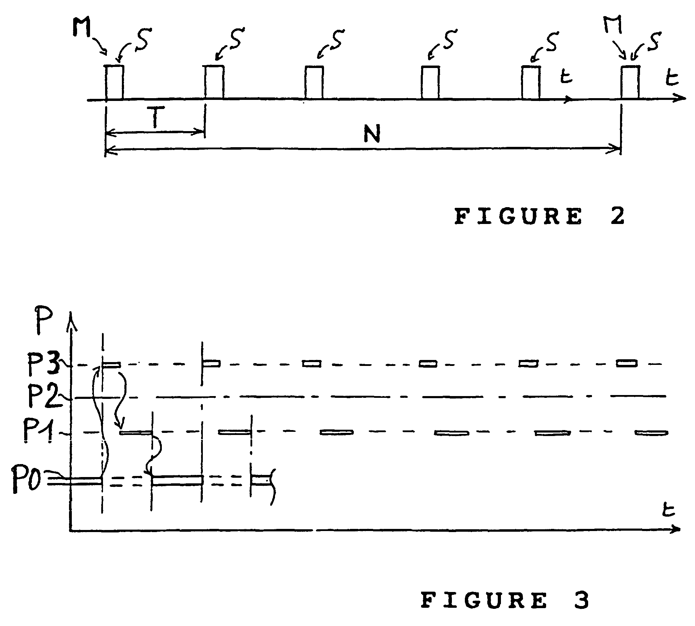

L'oscillateur 81 de la base de temps 8 oscille sur une fréquence déterminée en fonction du rythme de transmission des données sur le réseau GSM 39. Cette fréquence déterminée n'est pas obligatoirement égale à ce rythme, mais elle présente avec lui un rapport, entier ou fractionnaire, constant. Dans cet exemple, afin de se prémunir de la dérive possible de l'oscillateur, celui-ci est relié en entrée à l'interface radio 30 pour recevoir du modem 35 le rythme du réseau GSM 39 et s'asservir dessus. Le rythme du réseau 39 est en pratique défini à partir de la fréquence de la porteuse radio qui asservit à cette fréquence l'oscillateur 81. Comme illustré sur la figure 2, les diviseurs de fréquence 82 fournissent régulièrement au microprocesseur 9 des impulsions cycliques à plus faible rythme, ici des triplets d'impulsions S réparties sur une période T de 60 ms, chaque impulsion S respective étant suivie d'une période de 4/13, 4/13 et 5/13 des 60 ms. En outre, les diviseurs 82 fournissent, sur une autre sortie, une impulsion basse fréquence M, dite de motif, à chaque fois que, ici, cinq des impulsions S ci-dessus ont été engendrées, c'est-à-dire environ tous les N = 100 ms.

La base de temps 8 fournit en outre des signaux d'horloge haute fréquence (MHz) commandant le rythme du microprocesseur 9 et en particulier les ensembles d'adaptation 86 et 96.

Les impulsions S sont des commandes de synchronisation des registres tampon 32 et 33 avec le réseau GSM 39. A chaque réception d'impulsion S, le microprocesseur 9 transfère des données d'un bloc V110 du registre 32 au modem 35, par le registre de transit 92. Le modem 35 comporte, de façon classique pour le réseau GSM, un registre tampon, non représenté, permettant de stocker deux blocs de données, qui seront entrelacées avec ajout de redondance lors de leur émission radio, registre tampon qui permet donc d'assurer une émission régulière de paquets de bits entre les réceptions successives des blocs de données provenant du registre 32.

De même, ici par partage de temps entrelacé du bus, les données radio reçues par le modem 35 sont transférées au registre tampon 33. Cette synchronisation par les impulsions S évite ainsi tout risque d'erreur de transmission entre le circuit radio 30 et l'ensemble 10. Les registres tampon 31 à 34 qui, fonctionnellement, sont en fait une partie des moyens adaptateurs (86, 96), ont une taille suffisante pour contenir plusieurs blocs de données afin de tolérer des fluctuations dans le délai d'attente de la disponibilité des ensembles d'adaptation 86 et 96 (disponibilité du microprocesseur multitâche 9 pour effectuer les tâches symbolisées par les ensembles 86 et 96). Cependant, le flux de données V24 doit, en moyenne, être adapté au flux de données V110, donc au rythme du réseau GSM 39, que traduisent les impulsions S et M. Il a été trouvé que les impulsions M, à période N cinq fois plus faible que la période moyenne des impulsions S, définissaient une période N correspondant à une transmission d'un nombre entier d'octets, indépendamment du choix de vitesse parmi celles prévues sur le réseau GSM 39, permettant donc de traiter les données sous forme d'octets. De ce fait, on préfère ici synchroniser le cycle de fonctionnement global de la totalité des chaînes ou voies d'émission 11, 91, 31, 86, 32, 92, 30 et de réception 30, 93, 33, 96,34, 94, 11 sur les impulsions de motif M, avec aussi, dans ce cycle global, des cycles plus courts pour par exemple les transferts de données, selon la périodicité des impulsions S.

Entre deux impulsions de motif M, un motif de cinq blocs de données à émettre est traité dans l'ensemble 86, et de même en réception dans l'ensemble 96 pour en particulier vérifier l'intégrité des octets de données reçues du réseau 39. Cinq impulsions S commandent ainsi, en émission et en réception, cinq transferts successifs, à travers l'unité centrale 10, de blocs formant au total un motif.

Les transferts octet par octet sur le bus peuvent être répartis dans la période N des impulsions M, c'est-à-dire éventuellement discontinus, dans la mesure où le flux moyen prévu de données est écoulé sur cette période N.

De même, les circuits d'adaptation 86 et 96 doivent effectuer cette adaptation d'un motif dans cette même période N des impulsions M. En bref, il s'agit d'un fonctionnement en temps réel réalisé au moyen de la gestion par niveaux de priorité des contentions entre requêtes d'exécution des diverses tâches, comme cela est exposé plus en détails ci-après.

La figure 3 illustre la gestion des priorités P. Il y est représenté quatre niveaux de priorité allant croissant dans l'ordre P0, P1, P2, P3. Le niveau inférieur P0 est attribué à une tâche de fond du microprocesseur 9, le niveau P1, comme déjà indiqué, à l'adaptation (86, 96) des données, le niveau P2 à une tâche de scrutation du clavier du combiné et le niveau P3 à la tâche de transfert entre Le circuit radio 30 et les registres tampon 32 et 33, à travers les registres de transit respectifs 92 et 93, tâche commandée par une impulsion S. Comme l'illustrent les flèches interniveaux, la tâche de niveau P0 est interrompue par une impulsion S, qui active une requête d'exécution de la tâche de transfert prioritaire, de niveau P3. Après exécution de celle-ci, ce sont les tâches d'adaptation 86 et 96 qui, ayant présenté une requête du fait qu'était aussi arrivée une impulsion M, occupent les circuits communs du microprocesseur 9. Ces tâches d'adaptation étant exécutées, et aucune autre requête nouvelle ne subsistant, la tâche de fond (P0) reprend. Au niveau P1, on a représenté un temps d'exécution d'adaptation après le début de chaque impulsion S, et non toutes les M impulsions de motif, pour illustrer le cas où l'adaptation serait effectuée à chaque transfert de bloc, et non par motif de cinq blocs, c'est-à-dire qu'alors, à chaque transmission vers le circuit radio 30, on effectue une adaptation de nouvelles données provenant du PC 40 pour recharger le registre tampon 32 de transmission (92) de l'ensemble d'adaptation 86 au circuit radio 30.

On peut encore choisir de recharger le registre tampon 32, de transmission de l'ensemble d'adaptation 86 au circuit radio, avec la périodicité N, sous-multiple de ses transmissions (92) vers le circuit radio 30 et ceci avec un niveau de priorité inférieur à celui de ces transmissions, par exemple sensiblement voisin de P1.

On gère ainsi de façon souple et optimale les diverses priorités.

On conçoit que l'invention peut être mise en oeuvre dans tout ensemble ayant les fonctionnalités de cet exemple détaillé, la mobilité ou portabilité n'étant qu'une caractéristique annexe.

## Revendications

1. Procédé d'échange de données entre un réseau radio de communication (39), transmettant les données à un rythme déterminé, et des moyens de traitement de données (40) reliés au réseau (39) par des moyens d'adaptation (86; 96), interposés entre les moyens de traitement (40) et des moyens radio (30) d'interface avec le réseau (39), commandés par une unité centrale (10) d'un terminal de radiocommunication comprenant les moyens d'adaptation (86; 96), **caractérisé par le fait que**
- l'unité centrale (10) commande des tâches des moyens d'adaptation (86; 96) et d'autres en temps partagé,
- on asservit sur le rythme du réseau (39) la tâche de transmission des données (32, 92; 33, 93) entre les moyens d'adaptation (32, 92; 33, 93) et les moyens radio (30),
- on affecte aux tâches (32, 92; 33, 93; 86, 96) commandées par l'unité centrale des niveaux de priorité (P1, P3) et
- on affecte à ladite tâche de transmission (32, 92; 33, 93) un niveau de priorité (P3) supérieur à celui (P1) des tâches des moyens d'adaptation (86; 96).

2. Procédé d'échange selon la revendication 1, dans lequel on recharge un registre tampon (32), de transmission des moyens adaptateurs (86) aux moyens radio (30), avec une périodicité (N) sous-multiple de ses transmissions (92) vers les moyens radio (30) et avec un niveau de priorité (P1) inférieur à celui (P3) de ces transmissions (92).

3. Procédé d'échange selon la revendication 1, dans lequel, à chaque transmission depuis un registre tampon (32) des moyens adaptateurs (86) vers les moyens radio (30), on recharge le registre (32) en effectuant par ailleurs une adaptation (86) de nouvelles données provenant des moyens de traitement (40).

## Patentansprüche

1. Verfahren zum Austausch von Daten zwischen einem die Daten in einem vorgegebenen Takt übertragenden Kommunikationsfunknetz (39) und Datenverarbeitungsmitteln (40), die mit dem Netz (39) über Anpassungsmittel (86; 96) verbunden sind, die zwischen den Verarbeitungsmitteln (40) und eine Schnittstelle zum Netz (39) bildenden Funkmitteln (30) angeordnet sind, die von einer die Anpassungsmittel (86; 96) enthaltenden Zentraleinheit (10) eine Funkendgeräts gesteuert werden, **dadurch gekennzeichnet, daß**
- die Zentraleinheit (10) Tasks der Anpassungsmittel (86; 96) und andere im Time-Sharing steuert,
- man die Task zur Übertragung der Daten (32, 92; 33, 93) zwischen den Anpassungsmitteln (86 ; 96) und den Funkmitteln (30) auf den Takt des Netzes (39) regelt,
- man den von der Zentraleinheit gesteuerten Tasks (32, 92; 33, 93; 86, 96) Prioritätsstufen (P1, P3) zuweist und
- man der Übertragungstask (32, 92; 33, 93) eine Prioritätsstufe (P3) oberhalb derjenigen (P1) der Tasks der Anpassungsmittel (86; 96) zuweist.

2. Austauschverfahren nach Anspruch 1, wobei man ein Pufferregister (32) zur Übertragung von den Anpassungsmitteln (86) zu den Funkmitteln (30) mit einer Periodizität (N) neu lädt, die ein Teiler seiner Übertragungen (92) zu den Funkmitteln (30) ist, und mit einer Prioritätsstufe (P1) unterhalb derjenigen (P3) dieser Übertragungen (92).

3. Austauschverfahren nach Anspruch 1, wobei man bei jeder Übertragung von einem Pufferregister (32) der Anpassungsmittel (86) zu den Funkmitteln (30) das Register (32) neu lädt, wobei ferner eine Anpassung (86) von von den Verarbeitungsmitteln (40) stammenden neuen Daten bewirkt wird.

## Claims

1. Method of exchanging data between a radio communication network (39), transmitting data at a predetermined rate, and data processing means (40) linked to the network (39) by adaptation means (86; 96), placed between the processing means (40) and radio means (30) of interface with the network (39), controlled by a central unit (10) of a radio communication terminal comprising the adaptation means (86; 96), **characterised in that**
- the central unit (10) controls the tasks of the adaptation means (86; 96) and others on a time-sharing basis,
- the task of transmitting data (32, 92; 33, 93) between the adaptation means (86 ; 96) and the radio means(30) is controlled at the network rate (39),
- the tasks (32, 92; 33, 93; 86, 96) controlled by the central unit are assigned levels of priority (P1, P3) and
- a priority level (P3) is assigned to the said transmission task (32, 92; 33, 93) higher than that (P1) assigned to the tasks of the adaptation means (86; 96).

2. Exchange method according to claim 1, wherein a buffer register (32), for transmission from the adaptive means (86) to the radio means (30), is reloaded with a periodicity (N) which is a sub-multiple of its transmissions (92) towards the radio means (30) and with a priority level (P1) lower than that (P3) of these transmissions (92).

3. Exchange method according to claim 1, wherein, at each transmission from a buffer register (32) of the adaptive means (86) towards the radio means (30), the register is re-loaded while effecting an adaptation (86) of new data coming from the processing means (40).
